# EUROPEAN PATENT APPLICATION

(11) **EP 4 507 130 A2**
(43) Date of publication of application: **12.02.2025**
(21) Application number: 24193822.4
(22) Date of filing: 09.08.2024
(51) Int. Cl.: H01R 13/436, H01R 13/627, H01R 13/506, H01R 13/512, H01R 13/516

(54) **POWER CONNECTOR SYSTEM**

(30) Priority: 09.08.2023 US 202318446933
(71) Applicant: TE Connectivity Solutions GmbH, 8200 Schaffhausen (CH)
(72) Inventor: Daily, Christopher George, Middletown, PA 17057 (US); Mostoller, Matthew Edward, Middletown, PA 17057 (US)
(74) Representative: Johnstone, Edward Ian

(57) **Abstract**

A supply charging device (200) includes a supply power connector (210) having a supply housing (212) having a mating end (202) mated with a receive power connector (310) of the mobile device (102) along a mating axis (110). The supply housing (212) includes a front housing (214) and a rear housing (216) separate and discrete from the front housing (214) coupled to the front housing (214) at a separable interface (241). The rear housing (216) includes a cable chamber (208) and the front housing (214) includes a contact chamber (206). The supply charging device (200) includes a latch (290) latchably coupled to the receive power connector (310). The supply charging device (200) includes a contact assembly (220) held by the rear housing (216) with pins (225) of contacts (220) received in the contact chamber (206). The supply charging device (200) includes a cable assembly (232) coupled to the contact assembly (222) and extending from the cable end (204).

## Description

The subject matter herein relates generally to power connectors.

Mobile devices, such as autonomous vehicles, mobile robots, or other types of rechargeable mobile vehicles are movable within an environment to perform a task. The mobile devices need to be recharged from time to time. The mobile devices are returned to a charging station to supply power to the mobile device and recharge the batteries of the mobile device. A charging connector may be plugged onto a power connector of the mobile device to recharge the batteries of the mobile device. The charging connector is provided at ends of power cables. The power cables are susceptible to damage, such as due to stress and strain due to bending of the cables, pulling on the cables, or impact on the connector. Different customers inevitably desire different types of charging connectors for their particular application. It is costly to completely redesign all of the components of the various charging connectors.

A need remains for a robust and configurable charging connector for a mobile device.

The solution is provided by a supply charging device for a mobile device. The supply charging device includes a supply power connector having a supply housing extending between a front and a rear. The supply power connector has a mating end at the front. The mating end is configured to be mated with a receive power connector of the mobile device along a mating axis. The supply power connector has a cable end at the rear. The supply housing includes a front housing and a rear housing separate and discrete from the front housing. The rear housing is coupled to the front housing at a separable interface. The rear housing includes a cable chamber at the cable end. The front housing includes a contact chamber at the mating end. The supply charging device includes a latch pivotably coupled to the supply housing. The latch includes a latching finger configured to be latchably coupled to the receive power connector. The supply charging device includes a contact assembly held by the rear housing. The contact assembly includes supply power contacts. The supply power contacts have pins received in the contact chamber of the front housing for mating with the receive power connector. The contact assembly includes a supply data communication module held by the rear housing. The supply data communication module includes signal contacts at the mating end for electrical connection with the receive power connector. The supply charging device includes a cable assembly coupled to the contact assembly. The cable assembly includes power cables terminated to the corresponding supply power contacts. The power cables extend from the cable end.

The invention will now be described by way of example with reference to the accompanying drawings in which:
Figure 1 illustrates a charging system for charging a mobile device in accordance with an exemplary embodiment.
Figure 2 illustrates a charging system for charging a mobile device in accordance with an exemplary embodiment.
Figure 3 illustrates the charging system in accordance with an exemplary embodiment.
Figure 4 illustrates a front view of the mobile charging device in accordance with an exemplary embodiment.
Figure 5 illustrates a front view of the supply charging device in accordance with an exemplary embodiment.
Figure 6 is a front perspective view illustrating the supply charging device in accordance with an exemplary embodiment showing two of the interchangeable rear ends configured to be coupled to the universal front end.
Figure 7 is a rear perspective view illustrating the supply charging device in accordance with an exemplary embodiment showing two of the interchangeable rear ends configured to be coupled to the universal front end.
Figure 8 is a perspective view of one of the supply power contacts in accordance with an exemplary embodiment.
Figure 9 is a side perspective view of the contact assembly in accordance with an exemplary embodiment.
Figure 10 is a front perspective view of the contact assembly in accordance with an exemplary embodiment.
Figure 11 is a rear perspective view of a portion of the supply charging device in accordance with an exemplary embodiment.
Figure 12 is a perspective view of the latching feature in accordance with an exemplary embodiment.
Figure 13 is a rear perspective view of a portion of the front end of the supply charging device showing the latching feature received in the latch pocket of the front housing in accordance with an exemplary embodiment.
Figure 14 is a front perspective view of a portion of the supply charging device showing the rear end of the supply charging device in accordance with an exemplary embodiment.
Figure 15 is a front perspective view of the supply charging device showing the front end coupled to the rear end in accordance with an exemplary embodiment.
Figure 16 is a cross-sectional view of the supply charging device taken along one of the supply power contacts in accordance with an exemplary embodiment.
Figure 17 is a cross-sectional view of the supply charging device taken along the latching feature in accordance with an exemplary embodiment.
Figure 18 is a rear perspective, exploded view of a portion of the supply charging device in accordance with an exemplary embodiment.
Figure 19 is a top view of a portion of the supply charging device in accordance with an exemplary embodiment.
Figure 20 is a front perspective view of a portion of the supply charging device showing the rear end of the supply charging device in accordance with an exemplary embodiment.
Figure 21 is a front perspective view of the supply charging device showing the front end coupled to the rear end in accordance with an exemplary embodiment.
Figure 22 is a perspective view of one of the angled versions of the supply power contacts in accordance with an exemplary embodiment.
Figure 23 is a perspective view of the contact assembly in accordance with an exemplary embodiment.
Figure 24 is a cross-sectional view of the supply charging device taken along one of the supply power contacts in accordance with an exemplary embodiment.
Figure 25 is a cross-sectional view of the supply charging device taken along the latching feature in accordance with an exemplary embodiment.
Figure 26 is a front perspective view of the supply charging device showing a plurality of interchangeable handles configured to be coupled to the supply housing in accordance with an exemplary embodiment.
Figure 27 is a front perspective view illustrating the mobile charging device in accordance with an exemplary embodiment.
Figure 28 is a rear perspective, exploded view of a portion of the mobile charging device in accordance with an exemplary embodiment.
Figure 29 is a cross-sectional view of the mobile charging device taken along one of the receive power contacts in accordance with an exemplary embodiment.
Figure 30 is a cross-sectional view of the mobile charging device taken along the latching feature in accordance with an exemplary embodiment.

In one embodiment, a supply charging device for a mobile device is provided. The supply charging device includes a supply power connector having a supply housing extending between a front and a rear. The supply power connector has a mating end at the front. The mating end is configured to be mated with a receive power connector of the mobile device along a mating axis. The supply power connector has a cable end at the rear. The supply housing includes a front housing and a rear housing separate and discrete from the front housing. The rear housing is coupled to the front housing at a separable interface. The rear housing includes a cable chamber at the cable end. The front housing includes a contact chamber at the mating end. The supply charging device includes a latch pivotably coupled to the supply housing. The latch includes a latching finger configured to be latchably coupled to the receive power connector. The supply charging device includes a contact assembly held by the rear housing. The contact assembly includes supply power contacts. The supply power contacts have pins received in the contact chamber of the front housing for mating with the receive power connector. The contact assembly includes a supply data communication module held by the rear housing. The supply data communication module includes signal contacts at the mating end for electrical connection with the receive power connector. The supply charging device includes a cable assembly coupled to the contact assembly. The cable assembly includes power cables terminated to the corresponding supply power contacts. The power cables extend from the cable end.

In another embodiment, a supply charging device for a mobile device is provided. The supply charging device includes a supply power connector having a supply housing extending between a front and a rear. The supply power connector has a mating end at the front. The mating end is configured to be mated with a receive power connector of the mobile device along a mating axis. The supply power connector has a cable end at the rear. The supply housing includes a front housing and a rear housing separate and discrete from the front housing. The rear housing is coupled to the front housing at a separable interface. The front housing includes a contact chamber at the mating end extending along the mating axis. The rear housing includes a cable chamber at the cable end extending along a cable exit axis oriented non-parallel to the mating axis. The supply charging device includes a contact assembly held by the rear housing. The contact assembly includes supply power contacts and signal contacts. The supply power contacts have pins received in the contact chamber of the front housing for mating with the receive power connector. Each pin is bent between a front end and a rear end. The front end extends parallel to the mating axis. The rear end extends non-parallel to the mating axis. The supply charging device includes a cable assembly coupled to the contact assembly. The cable assembly includes power cables terminated to the rear ends of the corresponding supply power contacts. The power cables extend from the cable end along the cable exit axis.

In a further embodiment, a charging system is provided and includes a mobile charging device having a receive housing extending between a front and a rear. The receive housing has a top and a bottom. The receive power connector has a mating end at the front. The receive power connector has a cable end. The receive housing includes a receive contact chamber at the mating end and a receive cable chamber at the cable end. The receive power connector includes receive power contacts in the receive contact chamber. The receive power connector includes a receive data communication module at the mating end. The mobile charging device includes a receive cable assembly coupled to the receive power connector and extending from the cable end. The receive cable assembly includes receive power cables terminated to the corresponding receive power contacts. The charging system includes a supply charging device including a supply power connector that has a supply housing extending between a front and a rear. The supply housing has a top and a bottom. The supply power connector has a mating end at the front. The mating end is mated with the mating end of the receive power connector along a mating axis. The supply power connector has a cable end opposite the mating end. The supply housing includes a supply contact chamber at the mating end and a supply cable chamber at the cable end. The supply power connector includes supply power contacts in the supply contact chamber for mating with the corresponding receive power contacts along the mating axis. The supply power connector includes a supply data communication module at the mating end for electrical connection with the receive data communication module of the receive power connector. The supply charging device includes a supply cable assembly coupled to the supply power connector and extending from the cable end. The supply cable assembly includes supply power cables terminated to the corresponding supply power contacts. The supply power cables extending along cable axes oriented non-parallel to the mating axis, wherein the supply housing includes a front housing and a rear housing separate and discrete from the front housing. The rear housing is coupled to the front housing at a separable interface. The front housing includes the supply contact chamber. The rear housing includes the supply cable chamber. The rear housing holds the supply power contacts and the supply data communication module.

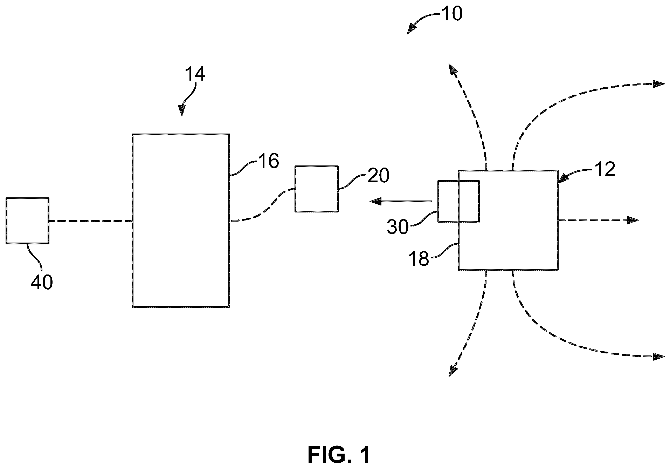

Figure 1 illustrates a charging system 10 for charging a mobile device 12 in accordance with an exemplary embodiment. The charging system 10 includes a supply charging device 20 and a mobile charging device 30. The mobile charging device 30 is provided on the mobile device 12. The supply charging device 20 is provided on a charging component 14. The charging component 14 may extend from a wall outlet or charging station 16. The charging component 14 may be at a docketing station for the mobile device 12. The charging component 14 may include a charging plug at an end of a cable bundle that is plugged into the mobile charging device 30 to charge a battery of the mobile device 12. The charging component 14 may be provided in a room or building in a fixed location and the mobile device 12 may be movable within the room or building and returned to the vicinity of the charging station 16 for connection to the charging component 14 to recharge the mobile device 12. The supply charging device 20 receives power from a power supply 40.

In an exemplary embodiment, the mobile device 12 may be an autonomous mobile device that is movable within an environment to perform a task and return to the supply charging device 20 to charge the autonomous mobile device 12. In various embodiments, the mobile device 12 may be a forktruck. In other various embodiments, the mobile device 12 may be a mobile robot, such as for used to perform tasks in a factory, a hotel, a store or another environment. For example, the mobile robot may be used to scan items on shelves, deliver items from one location to another location, or perform other tasks. The mobile charging device 30 is mounted to a body 18 of the mobile device 12.

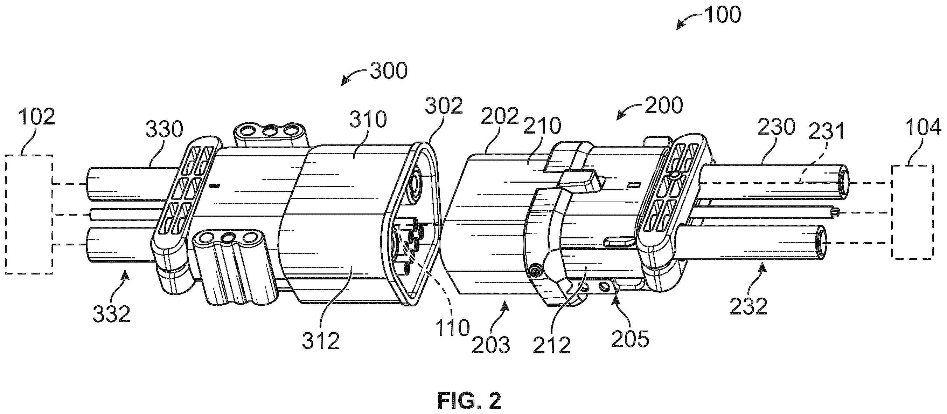

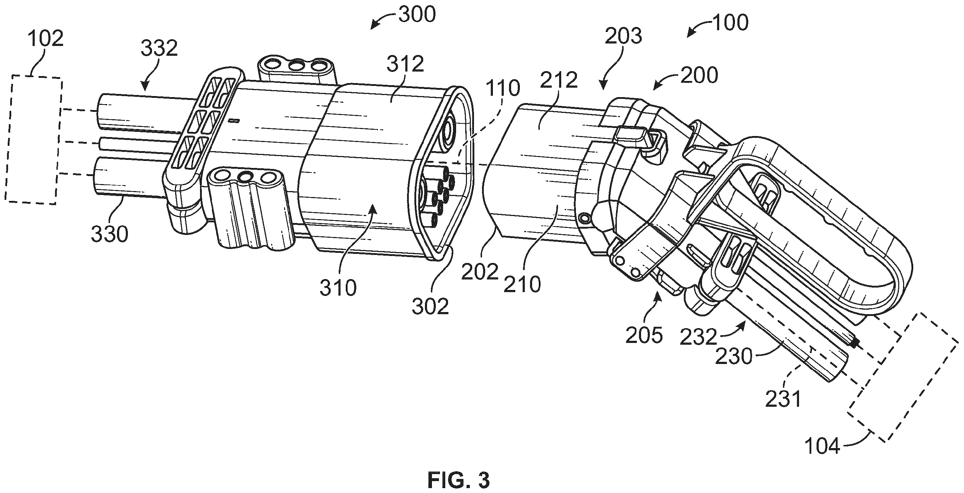

Figure 2 illustrates a charging system 100 for charging a mobile device 102 in accordance with an exemplary embodiment. Figure 3 illustrates the charging system 100 in accordance with an exemplary embodiment. The charging system 100 includes a supply charging device 200 and a mobile charging device 300. Figure 2 is a straight version of the supply charging device 200, wherein the power cables are oriented parallel to a mating axis 110. Figure 3 is an angled version of the supply charging device 200, wherein the power cables are oriented transverse or non-parallel to the mating axis 110. The angled version of the supply charging device 200 is shown with a handle. However, either version may use a handle or not. Additionally, various types of handles may be interchangeably used with the supply charging devices 200. The mobile charging device 300 receives power from the supply charging device 200 when coupled thereto to charge a battery of the mobile device 102.

The mobile charging device 300 is provided on the mobile device 102 and includes a mating end 302 configured to be mated with the supply charging device 200. For example, the mobile charging device 300 is configured to be coupled to a body or panel of the mobile device 102. The supply charging device 200 is part of a charging component 104 and includes a mating end 202 configured to be mated with the mobile charging device 300. The mating end 202 is identical for both the straight version and the angled version of the supply charging device 200. The mating end 202 of the supply charging device 200 is configured to be plugged into the mating end 302 of the mobile charging device 300. As such, both the straight version and the angled version of the supply charging device 200 is configured to be plugged into the same mating end 302 of the mobile charging device 300.

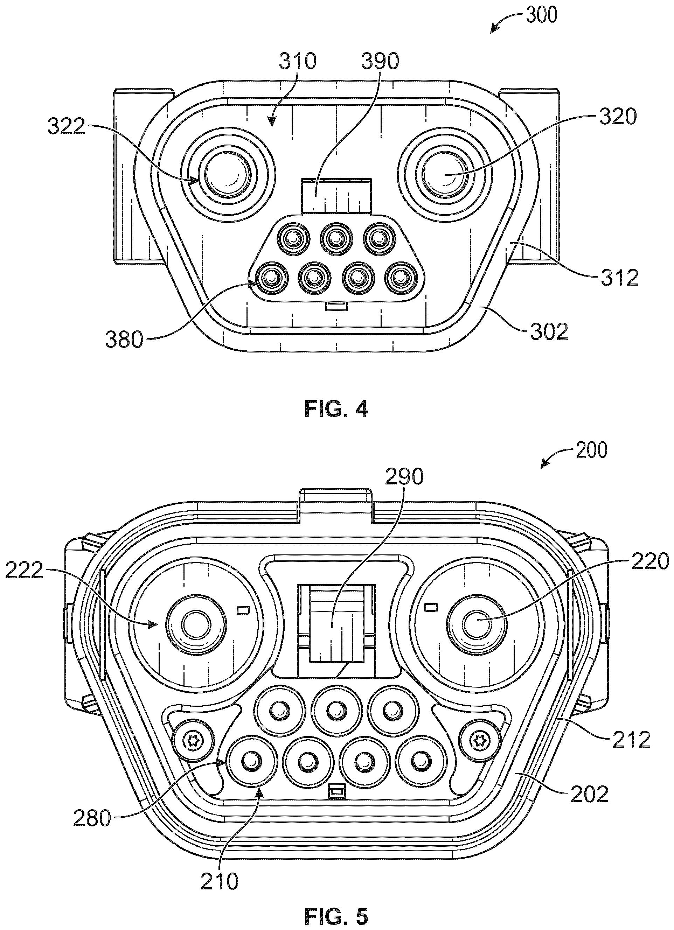

With additional reference to Figures 4 and 5, Figures 4 and 5 show front views of the mobile charging device 300 and the supply charging device 200, respectively. The mobile charging device 300 (Figure 4) includes a receive power connector 310 having a receive housing 312. The receive housing 312 includes a latching feature 390 to secure the supply charging device 200 to the mobile charging device 300. The receive power connector 310 includes a receive contact assembly 322 having a plurality of receive power contacts 320. The receive contact assembly 322 is coupled to the receive housing 312. The receive power connector 310 includes a cable assembly 332 having a plurality of receive power cables 330 terminated to the corresponding receive power contacts 320. The receive power connector 310 includes a receive data communication module 380 (Figure 4) coupled to the receive housing 312.

The supply charging device 200 (Figure 5) includes a supply power connector 210 having a supply housing 212. The supply housing 212 includes a latching feature 290 to secure the supply charging device 200 to the receive charging device 300. The supply power connector 210 includes a supply contact assembly 222 having a plurality of supply power contacts 220. The supply contact assembly 222 is coupled to the supply housing 212. The supply power connector 210 includes a cable assembly 232 having a plurality of supply power cables 230 terminated to the corresponding supply power contacts 220. The supply power connector 210 includes a supply data communication module 280 (Figure 5) coupled to the supply housing 212 configured to be coupled to the receive data communication module 380.

The mating end 202 of the supply charging device 200 is coupled to the mating end 302 of the receive charging device 300 along the mating axis 110. For example, the mating end 202 is plugged into the mating end 302. The supply power connector 210 is mated with the receive power connector 310. For example, the supply contacts of the supply contact assembly 222 are mated with the receive contacts of the receive contact assembly 322. In the illustrated embodiment, the supply contacts are pin contacts and the receive contacts are socket contacts; however, other types of contacts may be used in alternative embodiments. When mated, the supply data communication module 280 is mated with the receive data communication module 380. For example, signal contacts of the supply data communication module 280 are mated with the corresponding signal contacts of the receive data communication module 380. In the illustrated embodiment, the signal contacts of the supply data communication module 280 are pin contacts and the signal contacts of the receive data communication module 380 are socket contacts; however, other types of contacts may be used in alternative embodiments. When mated, the latching feature 290 of the supply charging device 200 is coupled to the latching feature 390 of the receive charging device 300 to securely couple the supply charging device 200 to the receive charging device 300.

In an exemplary embodiment, the supply charging device 200 includes interchangeable components to change the cable exit direction. For example, rear ends 205 of the supply charging device 200 may be interchangeable to change the cable exit direction. A front end 203 of the supply charging device 200 is universal and configured to be coupled to the interchangeable rear ends 205. In the illustrated embodiment, the straight version of the supply charging device 200 (Figure 2) orients the power cables 230 in-line with or parallel to the mating axis 110, whereas the angled version of the supply charging device 200 (Figure 3) orients the power cables 230 transverse or non-parallel to the mating axis, such as oriented 45° downward. Other angles are possible in alternative embodiments, such as at an angle of between 30° and 60° or at a 90° (right angle version). The supply power cables 230 extend along cable axes 231. The rear end of the supply housing 212 holds the cable axes 231 parallel to the mating axis 110 in the straight version. The rear end of the supply housing 212 holds the cable axes 231 non-parallel to the mating axis 110 in the angled version, which may be more convenient or easier for a user to hold. The rear portion of the supply housing 212 is angled to orient the power cables 230 at the angled orientation such that the power cables 230 do not need to be bent, which reduces internal strain on the power cables 230.

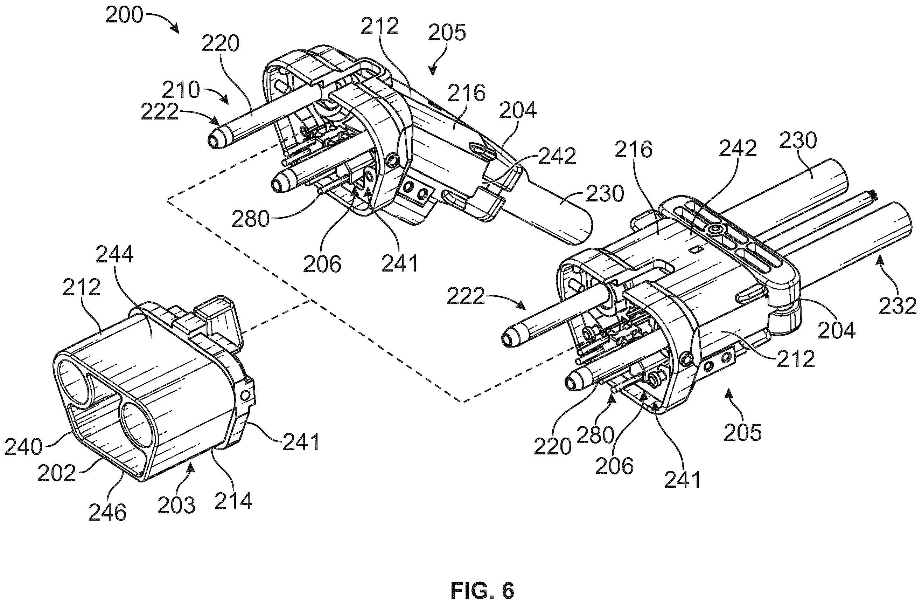

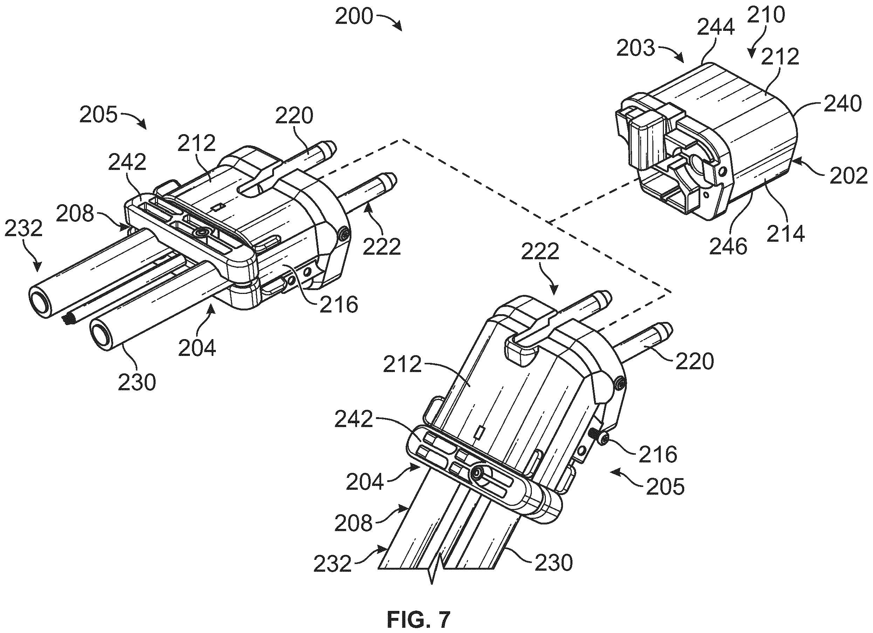

Figure 6 is a front perspective view illustrating the supply charging device 200 in accordance with an exemplary embodiment showing two of the interchangeable rear ends 205 configured to be coupled to the universal front end 203. Figure 7 is a rear perspective view illustrating the supply charging device 200 in accordance with an exemplary embodiment showing two of the interchangeable rear ends 205 configured to be coupled to the universal front end 203. Either of the rear ends 205 (for example, the straight version or the angled version) may be coupled to the front end 203 to change the cable exit orientation compared to the mating direction. The joining interfaces of both of the rear ends 205 are similar or identical such that both rear ends 205 may be joined with the same from end 203. As such, a modular system is provided that utilizes interchangeable components to reduce overall part numbers, which reduces the overall cost of manufacturing.

The supply charging device 200 includes the supply power connector 210, the supply contact assembly 222, the supply cable assembly 232, and the supply data communication module 280. The supply power connector 210 includes the supply housing 212. In an exemplary embodiment, the supply housing 212 is a multi-piece housing including a front housing 214 and a rear housing 216. The front housing 214 is part of the front end 203 of the supply charging device 200. The rear housing 216 is part of the rear end 205 of the supply charging device 200. The different versions of the device (for example, the straight version and the angled version) have rear housings 216 of different shapes (for example, straight versus angled).

The supply housing 212 includes a front 240 and a rear 242. The front housing 214 includes the front 240 and the rear housing 216 includes the rear 242. The rear housing 216 is joined to the front housing 214 at an interface 241 located between the front 240 and the rear 242. The interfaces of the rear housings 216 of the straight and angled versions may be similar or identical to allow joining to the front housing 214. The supply housing 212 includes a top 244 and a bottom 246. In an exemplary embodiment, the mating end 202 is at the front 240 of the supply housing 212 (for example, at the front housing 214) and a cable end 204 of the supply power connector 210 is at the rear 242 of the supply housing 212 (for example, at the rear housing 216). The cables 230 enter/exit the supply housing 212 at the cable end 204. The cables 230 exit the supply housing 212 along a cable exit axis. With the straight version, the cables 230 exit parallel to the mating axis. With the angled version, the cables 230 exit at an angle, which is transverse or non-parallel to the mating axis. In the illustrated embodiment, the cables 230 exit the angled version at an angle of between 30° and 60°, such as at approximately 45°.

In an exemplary embodiment, the supply housing 212 includes a supply contact chamber 206 that receives the supply power contacts 220 and a supply cable chamber 208 that receives the supply power cables 230. In an exemplary embodiment, the front housing 214 includes the contact chamber 206. The rear housing 216 may include a portion of the contact chamber 206. For example, the supply power contacts 220 may be located in both the front housing 214 and the rear housing 216. The supply cable chamber 208 is located in the rear housing 216. For example, the power cables 230 may extend into the rear housing 216 and are terminated to the corresponding power contacts 220 in the rear housing 216. Optionally, portions of the supply power contacts 220 may be located within the supply cable chamber 208 to connect with the supply power cables 230. The supply cable chamber 208 is located at the rear 242. The supply cable chamber 208 may be open at the rear 242 to receive the cables 230. In the illustrated embodiment, the supply cable chamber 208 extends generally horizontally in the straight version and extends at an angle (for example, 45°) in the angled version. In an exemplary embodiment, the supply power cables 230 extend along linear paths through the supply cable chamber 208. The supply power cables 230 do not include bends within the supply housing 212.

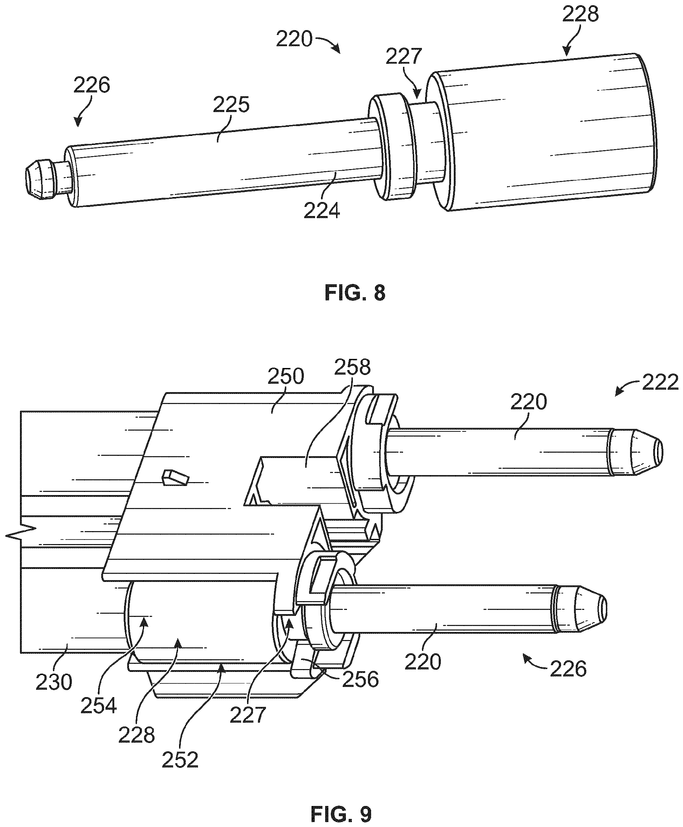

Figure 8 is a perspective view of one of the supply power contacts 220 in accordance with an exemplary embodiment. The supply power contact 220 may be for the straight version of the device. The supply power contact 220 includes a body 224 extending between a mating end 226 and a terminating end 228. The supply power contact 220 includes a groove 227 between the mating end 226 and the terminating end 228. The groove is used as a locating feature to locate the supply power contact 220 within the supply housing 212. In an exemplary embodiment, the body 224 is a machined part. However, the body 224 may be extruded, stamped and formed, milled, die cast or formed by other manufacturing technique. The mating end 226 is configured to be mated with the receive power connector 310 (shown in Figure 4). In the illustrated embodiment, the mating end 226 is a pin contact 225. The body 224 is cylindrical at the mating end 226. Other types of contacts may be provided at the mating end 226, such as a blade, a socket, a spring beam, and the like. In an exemplary embodiment, the terminating end 228 includes a crimp barrel configured to be crimped to the power cable 230. The terminated end 228 may include a weld pad or other type of termination in alternative embodiments.

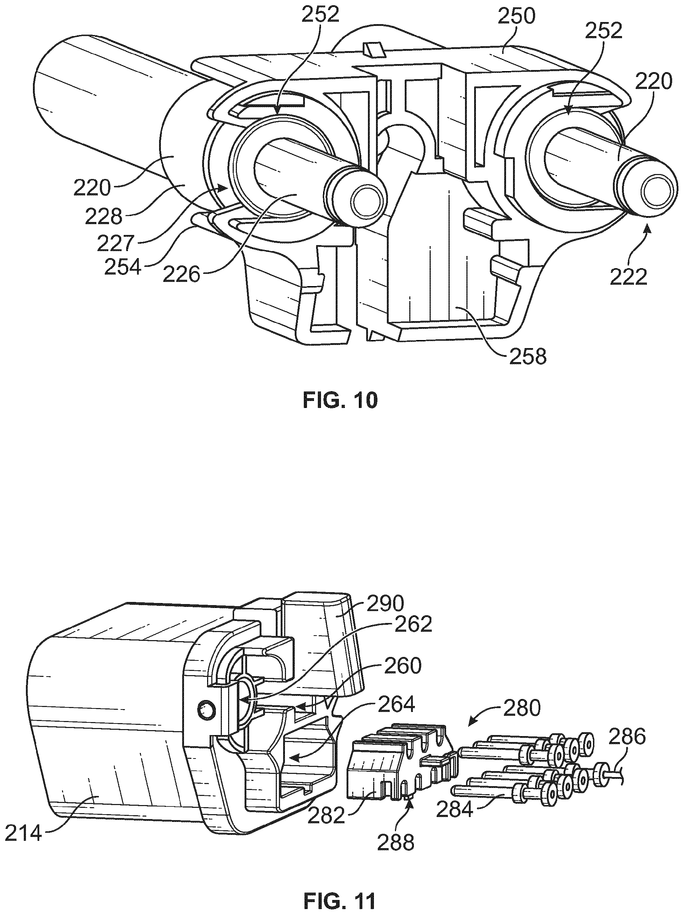

Figure 9 is a side perspective view of the contact assembly 222 in accordance with an exemplary embodiment. Figure 10 is a front perspective view of the contact assembly 222 in accordance with an exemplary embodiment. In the illustrated embodiment, the contact assembly 222 includes a pair of the supply power contacts 220. The contact assembly 222 may include greater or fewer supply power contacts 220 in alternative embodiments. In an exemplary embodiment, the contact assembly 222 includes a contact holder 250 used to hold the supply power contacts 220. The contact holder 250 is manufactured from a dielectric material, such as a plastic material, to isolate the power contact 220 from each other. In various embodiments, the contact holder 250 is a molded plastic part.

In an exemplary embodiment, the contact holder 250 includes contact channels 252 that receive the corresponding supply power contacts 220. Optionally, the contact channels 252 include openings 254 at sides of the contact holder 250 to receive the supply power contacts 220. For example, the supply power contacts 220 may be side loaded into the contact channels 252 through the openings 254. In an exemplary embodiment, the contact holder 250 includes a shoulder 256 extending into the contact channel 252. The shoulder 256 is configured be received in the groove 227 to locate the supply power contact 220 in the contact channel 252. Other types of locating and/or securing features may be used in alternative embodiments, such as latches, clips, fasteners, and the like. In an exemplary embodiment, the terminating ends 228 of the power contacts 220 are located in the contact channels 252, while the mating ends 226 extend forward of the contact holder 250. However, in alternative embodiments, the mating ends 226 may additionally or alternatively be located in the contact channels 252. In an exemplary embodiment, the contact holder 250 includes a front pocket 258 at the front of the contact holder 250. The front pocket 258 may be located between the contact channels 252. The front pocket 258 may be configured to receive the latch and/or the data communication module 280 (shown in Figure 5).

Figure 11 is a rear perspective view of a portion of the supply charging device 200 in accordance with an exemplary embodiment. Figure 11 illustrates the front housing 214, the latching feature 290, and the data communication module 280.

In an exemplary embodiment, the latching feature 290 is coupled to the front housing 214. A portion of the latching feature 290 may extend rearward of the front housing 214. For example, the front housing 214 includes a latch pocket 260 that receives the latching feature 290. The front housing 214 may include other openings that receive other components. For example, the front housing 214 includes contact bores 262 that receive portions of the supply power contacts 220, such as the pins at the mating ends of the supply power contacts 220. In an exemplary embodiment, the front housing 214 includes a rear pocket 264 at the rear of the front housing 214. The rear pocket 264 is configured to receive a portion of the data communication module 280. Optionally, a portion of the data communication module 280 may be received in the rear housing 216 (shown in Figure 6).

The data communication module 280 includes a data communication module housing 282 holding data communication module contacts 284 and data communication module wires 286 extending from the data communication module contacts 284. In an exemplary embodiment, the data communication module contacts 284 are pin contacts. However, the data communication module contacts 284 may be other types of contacts, such as socket contacts, blade contacts, spring contacts, and the like.

In an exemplary embodiment, the data communication module housing 282 includes contact channels 288 that receive the corresponding data communication module contacts 284. Optionally, the contact channels 288 include openings at sides of the data communication module housing 282 to receive the data communication module contacts 284. For example, the data communication module contacts 284 may be side loaded into the data communication module housing 282 through the openings. In an exemplary embodiment, the data communication module housing 282 includes shoulders or other types of locating features extending into the contact channel 288 to locate the data communication module contacts 284 in the contact channel 288. In an exemplary embodiment, mating ends of the data communication module contacts 284 extend forward of the data communication module housing 282 for mating with the receive data communication module.

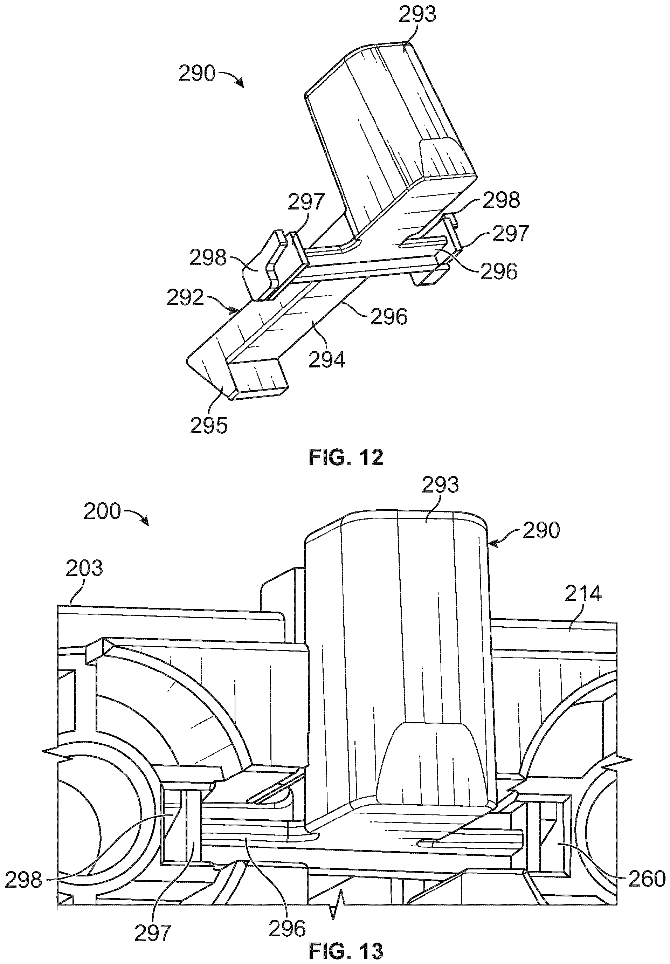

Figure 12 is a perspective view of the latching feature 290 in accordance with an exemplary embodiment. Figure 13 is a rear perspective view of a portion of the front end 203 of the supply charging device 200 showing the latching feature 290 received in the latch pocket 260 of the front housing 214.

In an exemplary embodiment, the latching feature 290 includes a deflectable latch 292. The latch 292 includes an actuator 293 and a latching beam 294 extending from the actuator 293. The latching beam 294 includes a latching finger 295 at the distal end of the latching beam 294. The actuator 293 is actuated to release the latching finger 295. In an exemplary embodiment, the latch 292 includes support arms 296 extending from opposite sides of the latching beam 294. The support arms 296 include locating tabs 297 for locating the latch 292 in the front housing 214. In an exemplary embodiment, the latching feature 290 includes one or more biasing members 298 configured to engage the front housing 214 to hold the latch 292 in a loaded position. In the illustrated embodiment, the biasing members 298 are integral with the latch 292. For example, the biasing members 298 may be provided at distal ends of the support arms 296. When the latching feature 290 is loaded in the latch pocket 260, the biasing members 298 are deflected creating an internal biasing force that holds the latch 292 in the loaded position. For example, the biasing members 298 may force the latching finger 295 in a downward direction (for example, in a latched position) to interface with the latching feature 390 of the receive power connector 310. The actuator 293 may be pressed downward to lift the latching finger 295 in an upward direction (for example, to an unlatched position) to release the latching feature 290 from the latching feature 390. When the actuator 293 is released, the biasing members 298 return the latch 292 in the downward direction to the latched position.

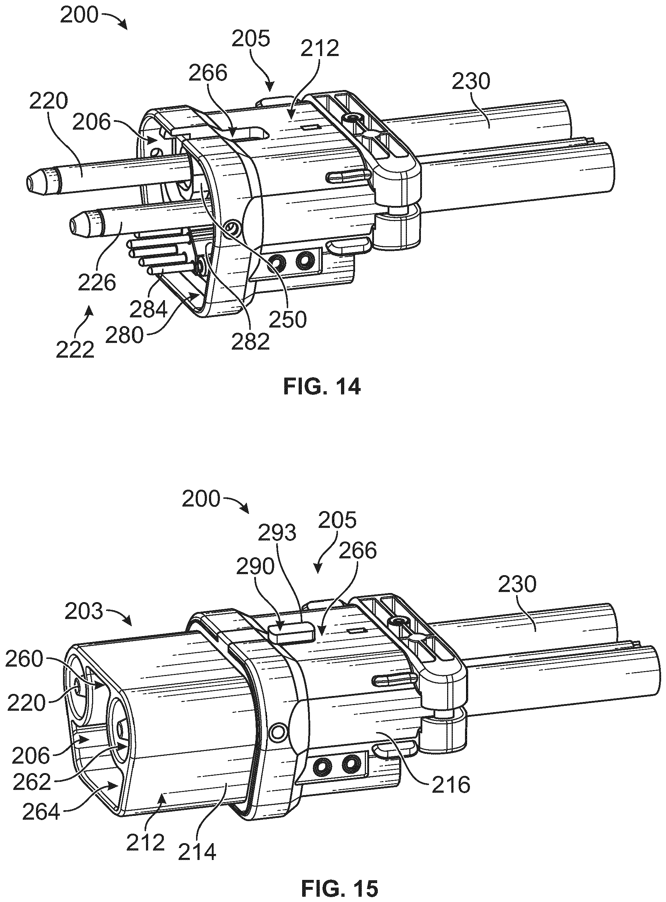

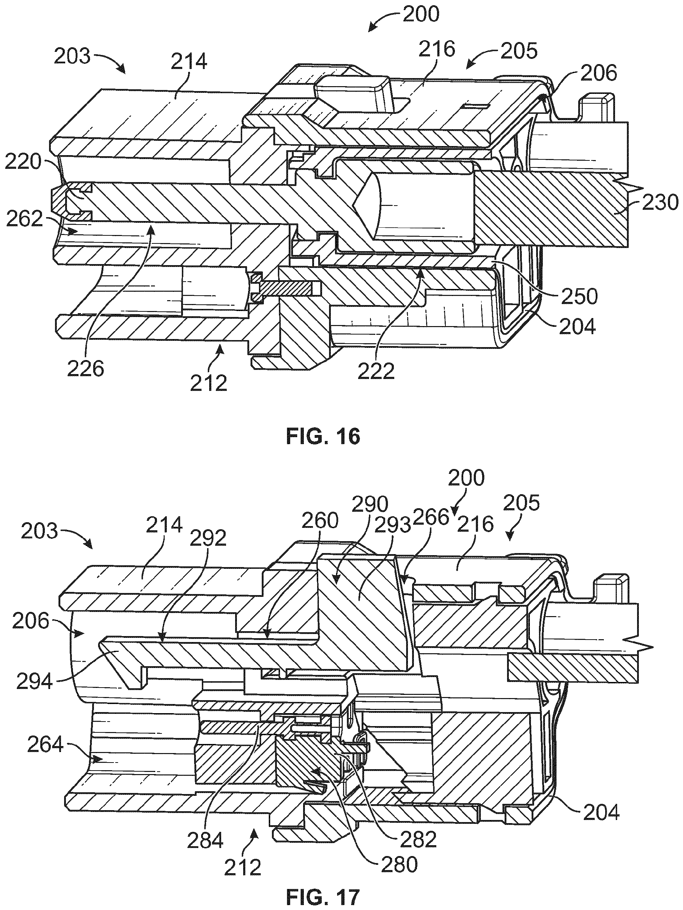

Figure 14 is a front perspective view of a portion of the supply charging device 200 showing the rear end 205 of the supply charging device 200. Figure 15 is a front perspective view of the supply charging device 200 showing the front end 203 coupled to the rear end 205. Figure 16 is a cross-sectional view of the supply charging device 200 taken along one of the supply power contacts 220. Figure 17 is a cross-sectional view of the supply charging device 200 taken along the latching feature 290. Figures 14-17 shows the straight version of the supply charging device 200, wherein the power cables 230 extend from the cable end 204 and a cable exit direction that is parallel to the mating axis.

When assembled, the contact assembly 222 and the data communication module 280 are received in the supply contact chamber 206 of the rear housing 216. The contact holder 250 and the data communication module housing 282 are coupled to the rear housing 216. The contact holder 250 holds the supply power contacts 220 relative to the rear housing 216. The pins at the mating ends 226 of the supply power contacts 220 extend forward of the rear housing 216. The pins of the supply power contacts 220 are received in the contact bores 262 of the front housing 214. The contact bores 262 form receptacles around the pins configured to receive socket contacts of the receive power connector 310. The data communication module housing 282 holds the data communication module contacts 284 relative to the rear housing 216. The pins of the data communication module contacts 284 extend forward of the data communication module housing 282. The pins of the data communication module contacts 284 are received in the supply contact chamber 206 of the front housing 214. For example, the pins of the data communication module contacts 284 are received in the pocket 264 at the bottom of the contact chamber 206 for mating with the data communication module 380 of the mobile charging device 300.

The latching feature 290 is coupled to the supply housing 212. For example, the latching feature 290 is received in the latch pocket 260 of the front housing 214. The latching beam 294 extends into the chamber 206 at the front of the front housing 214 to interface with the mobile charging device 300. The actuator 293 is located at the rear of the latch 292 and may extend rearward from the front housing 214. In an exemplary embodiment, the actuator 293 is received in a latch pocket 266 of the rear housing 216. The top of the actuator 293 is exposed and accessible at the top of the supply housing 212. The user may pressed downward on the actuator 293 to release the latching feature 290.

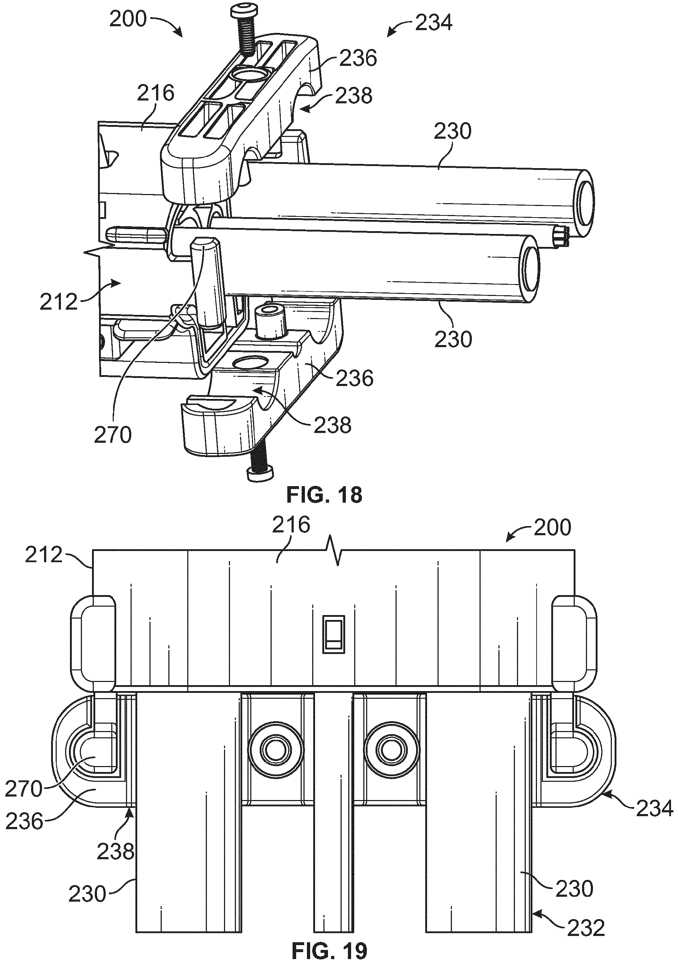

Figure 18 is a rear perspective, exploded view of a portion of the supply charging device 200 in accordance with an exemplary embodiment. Figure 19 is a top view of a portion of the supply charging device 200 in accordance with an exemplary embodiment. Figures 18 and 19 illustrate the cable assembly 232 being coupled to the supply housing 212. In an exemplary embodiment, the cable assembly 232 includes a cable strain relief 234 that provides strain relief for the power cables 230. The cable strain relief 234 is coupled to the mounting tabs 270 at the rear of the rear housing 216. In an exemplary embodiment, the cable strain relief 234 includes cable holders 236 configured to be secured together using fasteners. The cable holders 236 are provided on opposite sides of the power cables 230, such as above and below the power cables 230. Optionally, the cable holders 236 may be identical pieces inverted 180° relative to each other (for example, merely as). Each cable holder 236 includes cable channels 238 that receive the corresponding power cables 230. When the cable strain relief 234 is coupled to the mounting tabs 270, the power cables 230 are secured between the cable holders 236. The cable holder 236 may pinch or squeeze the power cables 230 to provide strain relief and prevent pulling on the power contacts 220.

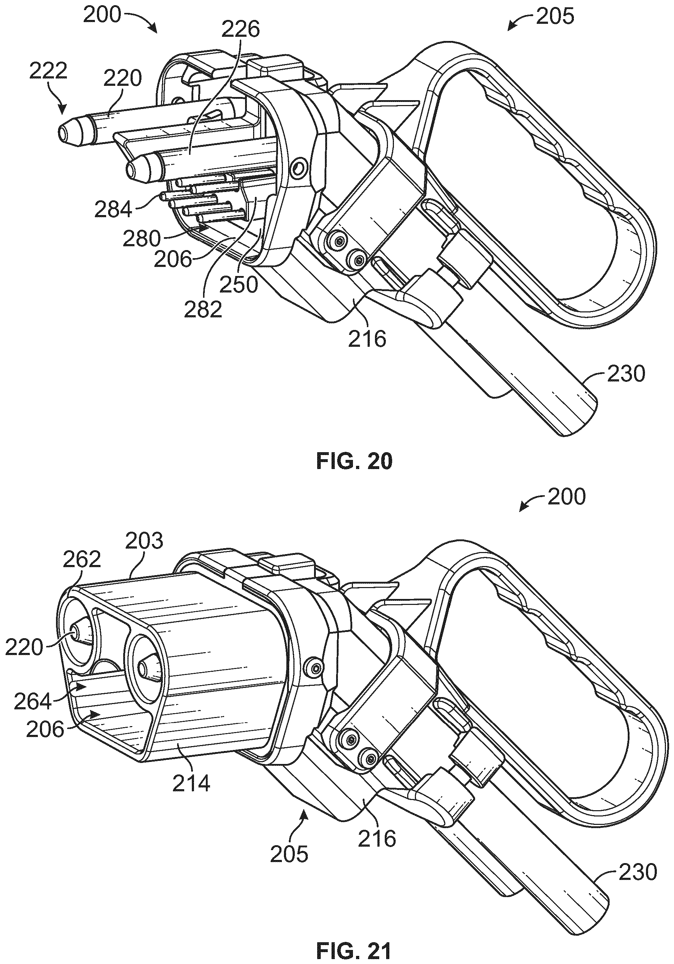

Figure 20 is a front perspective view of a portion of the supply charging device 200 showing the rear end 205 of the supply charging device 200. Figure 21 is a front perspective view of the supply charging device 200 showing the front end 203 coupled to the rear end 205. Figures 20 and 21 shows the angled version of the supply charging device 200, wherein the power cables 230 extend from the cable end 204 in a cable exit direction that is non-parallel to the mating axis. For example, the cable exit direction is angled downward at an angle of between 30° and 60°, such as at approximately 45°.

When assembled, the contact assembly 222 and the data communication module 280 are received in the supply contact chamber 206 of the rear housing 216. The joining interface at the front of the angled version (Figure 21) of the rear housing 216 may be identical to the joining interface at the front of the straight version (Figure 15) of the rear housing. The contact holder 250 and the data communication module housing 282 are coupled to the rear housing 216. The contact holder 250 holds the supply power contacts 220 relative to the rear housing 216. The pins at the mating ends 226 of the supply power contacts 220 extend forward of the rear housing 216. The pins of the supply power contacts 220 are received in the contact bores 262 of the front housing 214. The same front housing 214 is used on both the straight version (Figure 15) and the angled version (Figure 21). The data communication module housing 282 holds the data communication module contacts 284 relative to the rear housing 216. The pins of the data communication module contacts 284 extend forward of the data communication module housing 282. The pins of the data communication module contacts 284 are received in the supply contact chamber 206 of the front housing 214. For example, the pins of the data communication module contacts 284 are received in the pocket 264 at the bottom of the contact chamber 206 for mating with the data communication module 380 of the mobile charging device 300.

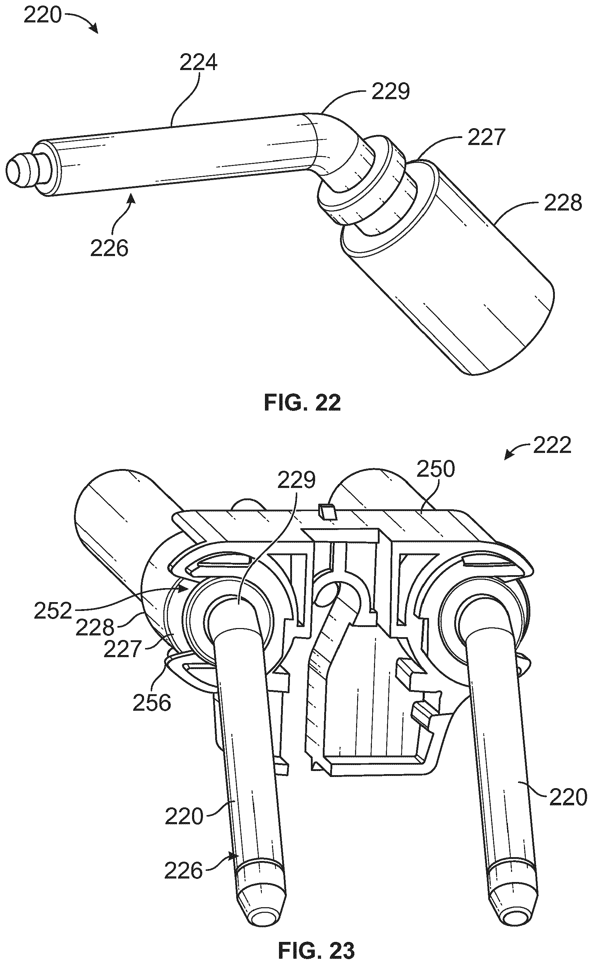

Figure 22 is a perspective view of one of the angled versions of the supply power contacts 220 in accordance with an exemplary embodiment. The supply power contact 220 includes the body 224 extending between the mating end 226 and the terminating end 228. In an exemplary embodiment, the body 224 includes a bend 229 that angles the terminating end 228 relative to the mating end 226. The bend controls the cable exit direction. In various embodiments, the bend 229 may be between 30° and 60°, such as approximately 45°. The supply power contact 220 includes the groove 227 between the mating end 226 and the terminating end 228. The groove 227 is used as a locating feature to locate the supply power contact 220 within the supply housing 212. The mating end 226 is configured to be mated with the receive power connector 310 (shown in Figure 4). In the illustrated embodiment, the mating end 226 is a pin contact. However, other types of contacts may be provided at the mating end 226 in alternative embodiments, such as a blade, a socket, a spring beam, and the like. In an exemplary embodiment, the terminating end 228 includes a crimp barrel configured to be crimped to the power cable 230. The terminated end 228 may include a weld pad or other type of termination in alternative embodiments.

Figure 23 is a perspective view of the contact assembly 222 in accordance with an exemplary embodiment. In the illustrated embodiment, the contact assembly 222 includes a pair of the supply power contacts 220 (with the bends 229). The contact assembly 222 may include greater or fewer supply power contacts 220 in alternative embodiments. In an exemplary embodiment, the contact assembly 222 includes the contact holder 250 used to hold the supply power contacts 220. The contact channels 252 receive the corresponding supply power contacts 220. The shoulder 256 is configured to be received in the groove 227 to locate the supply power contact 220 in the contact channel 252. Other types of locating and/or securing features may be used in alternative embodiments, such as latches, clips, fasteners, and the like. In an exemplary embodiment, the mating ends 226 (for example, the pins) extend forward of the contact holder 250.

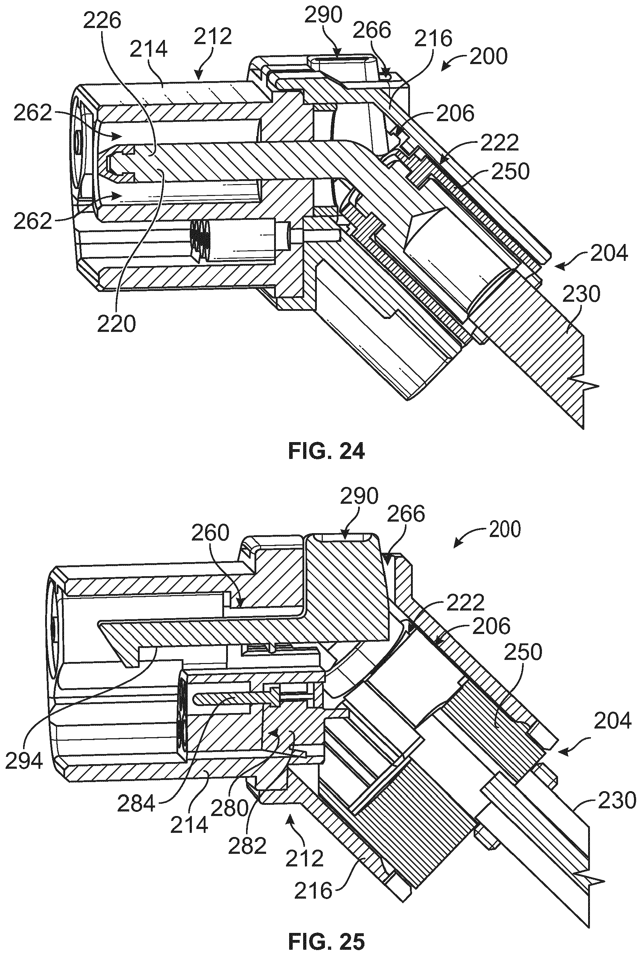

Figure 24 is a cross-sectional view of the supply charging device 200 taken along one of the supply power contacts 220. Figure 25 is a cross-sectional view of the supply charging device 200 taken along the latching feature 290. Figures 24-25 show the angled version of the supply charging device 200, wherein the power cables 230 extend from the cable end 204 at a cable exit direction that is non-parallel to the mating axis.

The contact assembly 222 and the data communication module 280 are received in the supply contact chamber 206 of the rear housing 216. The contact holder 250 and the data communication module housing 282 are coupled to the rear housing 216. The pins at the mating ends 226 of the supply power contacts 220 extend forward of the rear housing 216 into the contact bores 262 of the front housing 214. The pins of the data communication module contacts 284 extend forward of the data communication module housing 282 into contact channels in the front housing 214.

The latching feature 290 is coupled to the supply housing 212. For example, the latching feature 290 is received in the latch pocket 260 of the front housing 214 and the latch pocket 266 in the rear housing 216. The latching beam 294 extends into the chamber 206 at the front of the front housing 214 to interface with the mobile charging device 300.

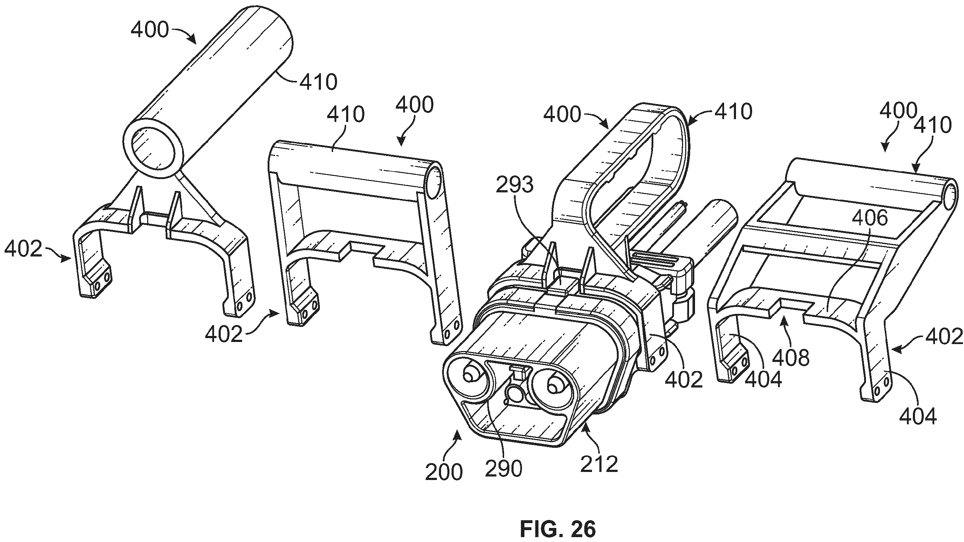

Figure 26 is a front perspective view of the supply charging device 200 showing a plurality of interchangeable handles 400 configured to be coupled to the supply housing 212. Figure 26 illustrates for different types of handles 400. Each of the handles 400 include an identical mounting bracket 402 such that the different handles 400 may be interchangeably coupled to the supply housing 212. The mounting bracket 402 includes mounting arms 404 extending along opposite sides of the supply housing 212 and a connecting portion 406 between the mounting arms 404. The mounting arms 404 may be secured to the supply housing 212 using fasteners, clips, latches, or other securing means. In the illustrated embodiment, the connecting portion 406 stands across the top of the supply housing 212. The connecting portion 406 includes a latch pocket 408 that receives a portion of the latching feature 290, such as the actuator 293. In the illustrated embodiment, the mounting bracket 402 is open at the bottom such that the handle 400 may be mounted to the supply housing 212 from above. However, in alternative embodiments, the mounting bracket 402 may extend completely circumferentially around the supply housing 212.

In an exemplary embodiment, the different handles 400 have different gripping portions 410 extending from the mounting bracket 402. The different gripping portions 410 allow different gripping orientations for the supply charging device 200. For example, the gripping portions 410 may be oriented parallel to the mating direction or perpendicular to the mating direction or at other angles. The gripping portions 410 may enclose or wrap around the user's hand for greater control. The gripping portions 410 may include finger grips 412 to allow for more convenient gripping by the user.

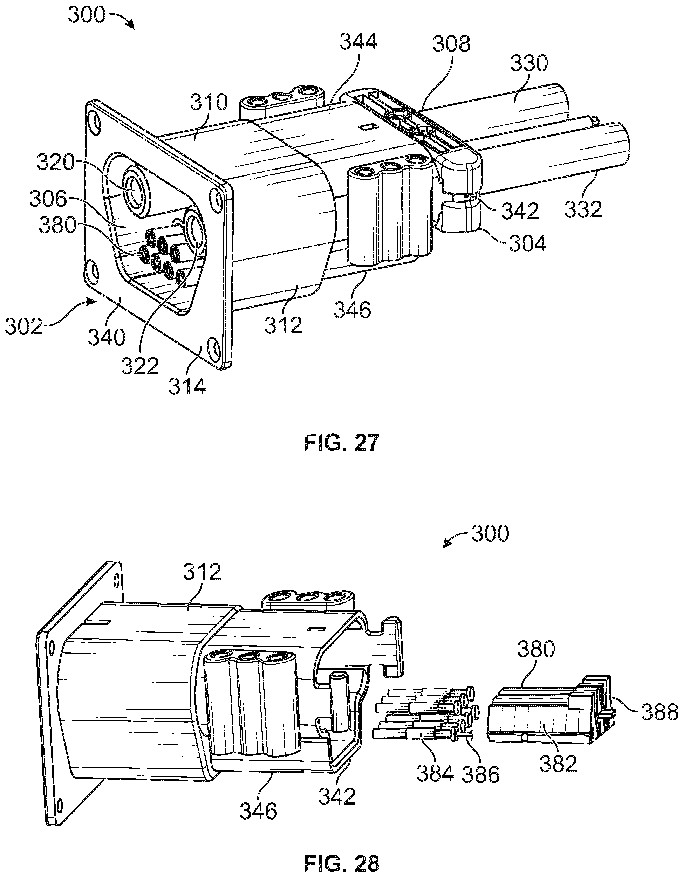

Figure 27 is a front perspective view illustrating the mobile charging device 300 in accordance with an exemplary embodiment. The mobile charging device 300 has a mating interface configured for mating with both the straight version and the angle version of the supply charging device 200. The interchangeable front housing 214 of the supply charging device allows both versions to mate with the same mobile charging device 300.

The mobile charging device 300 includes the receive power connector 310, the receive contact assembly 322, the receive cable assembly 332, and the receive data communication module 380. The receive power connector 310 includes the receive housing 312.

The receive housing 312 includes a front 340 and a rear 342. The receive housing 312 includes a top 344 and a bottom 346. In an exemplary embodiment, the receive housing 312 includes a flange 314 at the front, which may be used to secure the receive housing 312 to the mobile device, such as to the housing or shell or the mobile device. In an exemplary embodiment, the mating end 302 is at the front 340 of the receive housing 312 and a cable end 304 of the receive power connector 310 is at the rear 342 of the receive housing 312. The cables 330 enter/exit the receive housing 312 at the cable end 304. The cables 330 exit the receive housing 312 along a cable exit axis. In various embodiments, the cables 330 may exit the receive housing parallel to the mating axis. However, in alternative embodiments, the cables 330 may exit at other angles, such as perpendicular to the mating axis (for example, right angle) or at other angles, such as 45°.

In an exemplary embodiment, the receive housing 312 includes a receive contact chamber 306 that receives the receive power contacts 320 and a receive cable chamber 308 that receives the receive power cables 330. The receive contact chamber 306 is located at the front 340. The receive cable chamber 308 is located at the rear 342. The receive cable chamber 308 may be open at the rear 342 to receive the cables 330.

Figure 28 is a rear perspective, exploded view of a portion of the mobile charging device 300 in accordance with an exemplary embodiment. Figure 28 shows the data communication module 380. The data communication module 380 includes a data communication module housing 382 holding data communication module contacts 384 and data communication module wires 386 extending from the data communication module contacts 384. In an exemplary embodiment, the data communication module contacts 384 are socket contacts. However, the data communication module contacts 384 may be other types of contacts, such as pin contacts, blade contacts, spring contacts, and the like. In an exemplary embodiment, the data communication module housing 382 includes contact channels 388 that receive the corresponding data communication module contacts 384. During assembly, the data communication module 380 is loaded into the receive housing 312, such as through the rear 342. The data communication module 380 may be located proximate to the bottom 346 of the receive housing 312.

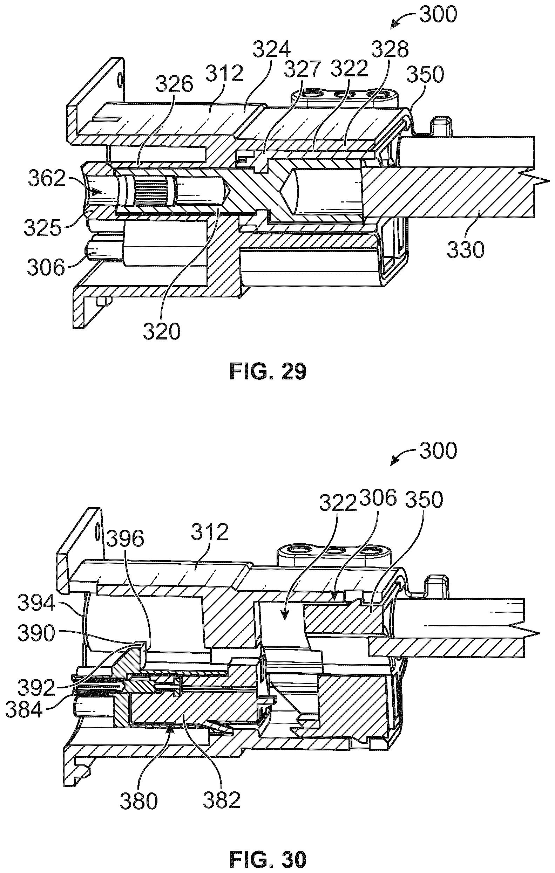

Figure 29 is a cross-sectional view of the mobile charging device 300 taken along one of the receive power contacts 320. Figure 30 is a cross-sectional view of the mobile charging device 300 taken along the latching feature 390. When assembled, the contact assembly 322 and the data communication module 380 are received in the receive contact chamber 306 of the receive housing 312. A contact holder 350 holds the receive power contacts 320 relative to the receive housing 312. The data communication module housing 382 holds the data communication module contacts 384 relative to the receive housing 312.

The latching feature 390 is located in the chamber 306. In the illustrated embodiment, the latching feature 390 is integral with the receive housing 312, such as being co-molded with the receive housing 312. In an exemplary embodiment, the latching feature 390 includes a catch element 392 having a ramp surface 394 and a catch surface 396. The catch element 392 is configured to interface with the latch 292 of the supply charging device 200 to latchably secure the supply charging device 200 to the mobile charging device 300. Other types of securing features may be used in alternative embodiments.

In an exemplary embodiment, the receive power contact 320 is a socket contact. The receive power contact 320 includes a body 324 extending between a mating end 326 and a terminating end 328. The receive power contact 320 includes a groove 327 between the mating end 326 and the terminating end 328. The groove 327 is used as a locating feature to locate the receive power contact 320 within the contact holder 350. In an exemplary embodiment, the body 324 is a machined part. However, the body 324 may be extruded, stamped and formed, milled, die cast or formed by other manufacturing technique. The body 324 is cylindrical at the mating end 326. The mating end 326 includes a socket 325 that is configured to receive the pin of the supply power contact 220 (shown in Figure 5). Other types of contacts may be provided at the mating end 326, such as a blade, a socket, a spring beam, and the like. In an exemplary embodiment, the terminating end 328 includes a crimp barrel configured to be crimped to the power cable 330. The terminated end 328 may include a weld pad or other type of termination in alternative embodiments.

When assembled, the mating end 326 of the receive power contact 320 is received in a contact bore 362 of the receive housing 312. The contact bore 362 is open at the front to receive the pin of the supply power contact 220. The bore 362 guides the pin of the supply power contact 220 into the socket 325 to electrically connect the receive power contact 320 and the supply power contact 220.

## Claims

1. A supply charging device (200) for a mobile device (102), the supply charging device (200) comprising:
a supply power connector (210) having a supply housing (212) extending between a front (240) and a rear (242), the supply power connector (210) having a mating end (202) at the front (240), the mating end (202) configured to be mated with a receive power connector (310) of the mobile device (102) along a mating axis (110), the supply power connector (210) having a cable end (204) at the rear (242), the supply housing (212) including a front housing (214) and a rear housing (216) separate and discrete from the front housing (214), the rear housing (216) being coupled to the front housing (214) at a separable interface (241), the rear housing (216) including a cable chamber (208) at the cable end (204), the front housing (214) including a contact chamber (206) at the mating end (202);
a latch (290) pivotably coupled to the supply housing (212), the latch (290) including a latching finger (295) configured to be latchably coupled to the receive power connector (310);
a contact assembly (222) held by the rear housing (216), the contact assembly (222) including supply power contacts (220), the supply power contacts (220) having pins (225) received in the contact chamber (206) of the front housing (214) for mating with the receive power connector (310), the contact assembly (222) including a supply data communication module (280) held by the rear housing (216), the supply data communication module (280) including signal contacts (284) at the mating end (202) for electrical connection with the receive power connector (310); and
a cable assembly (232) coupled to the contact assembly (222), the cable assembly (232) including power cables (230) terminated to the corresponding supply power contacts (220), the power cables (230) extending from the cable end (204).

2. The supply charging device (200) of claim 1, wherein the cable chamber (208) extends along a cable exit axis oriented nonparallel to the mating axis (110).

3. The supply charging device (200) of claim 1 or claim 2, wherein each pin (225) is bent between a front end (226) and a rear end (228), the front end (226) of the pin (225) extending parallel to the mating axis (110), the rear end (228) of the pin (225) extending nonparallel to the mating axis (110).

4. The supply charging device (200) of claim 1, wherein the rear housing (216) is either a straight rear housing or an angled rear housing, the straight rear housing (216) holding the pins (225) and the cables (230) parallel to the mating axis (110), the angled rear housing (216) holding the pins (225) parallel to the mating axis (110) and holding the cables (230) nonparallel to the mating axis (110).

5. The supply charging device (200) of claim 4, wherein the straight rear housing (216) and the angled rear housing (216) are interchangeably configured to be coupled to the front housing (214).

6. The supply charging device (200) of any preceding claim, wherein the supply power connector (210) includes a handle (400) removably coupled to the rear housing (216).

7. The supply charging device (200) of any preceding claim, wherein the supply power connector (210) includes a plurality of handles (400), the plurality of handles (400) being interchangeably coupled to the rear housing (216).

8. The supply charging device (200) of any preceding claim, wherein the latch (290) includes an actuator (293) and a latching beam (294), the latching beam (294) located in a latch pocket (260) of the front housing (214), the actuator (293) received in a latching slot (266) in the rear housing (216).

9. The supply charging device (200) of any preceding claim, wherein the contact assembly (222) includes a contact holder (250) holding the supply power contacts (220), the contact holder (250) received in the rear housing (216), the contact holder (250) positioning the pins (225) of the supply power contacts (220) in the front housing (214).

10. The supply charging device (200) of any preceding claim, wherein the front housing (214) includes contact bores (262), the pins (225) of the supply power contacts (220) being received in the contact bores (262).

11. The supply charging device (200) of any preceding claim, wherein the cable assembly (232) includes a cable strain relief (234) coupled to the rear (242) of the supply housing (212), the cable strain relief (234) coupled to the power cables (230) to secure the power cables (230) relative to the supply housing (212).

12. A supply charging device (200) for a mobile device (102), the supply charging device (200) comprising:
a supply power connector (210) having a supply housing (212) extending between a front (240) and a rear (242), the supply power connector (210) having a mating end (202) at the front (240), the mating end (202) configured to be mated with a receive power connector (310) of the mobile device (102) along a mating axis (110), the supply power connector (210) having a cable end (204) at the rear (242), the supply housing (212) including a front housing (214) and a rear housing (216) separate and discrete from the front housing (214), the rear housing (216) being coupled to the front housing (214) at a separable interface (241), the front housing (214) including a contact chamber (206) at the mating end (202) extending along the mating axis (110), the rear housing (216) including a cable chamber (208) at the cable end (204) extending along a cable exit axis oriented non-parallel to the mating axis (110);
a contact assembly (222) held by the rear housing (216), the contact assembly (222) including supply power contacts (220) and signal contacts (284), the supply power contacts (220) having pins (225) received in the contact chamber (206) of the front housing (214) for mating with the receive power connector (310), each pin (225) being bent between a front end (226) and a rear end (228), the front end (226) extending parallel to the mating axis (110), the rear end (228) extending non-parallel to the mating axis (110); and
a cable assembly (232) coupled to the contact assembly (222), the cable assembly (232) including power cables (230) terminated to the rear ends (228) of the corresponding supply power contacts (220), the power cables (230) extending from the cable end (204) along the cable exit axis.

13. The supply charging device (200) of claim 12, wherein the supply power connector (210) includes a plurality of handles (400), the plurality of handles (400) being interchangeably coupled to the rear housing (216).

14. The supply charging device of claim 12 or claim 13, further comprising a latch (290) pivotably coupled to the supply housing (212), the latch (290) including a latching finger (295) configured to be latchably coupled to the receive power connector (310).
